# EUROPÄISCHE PATENTSCHRIFT

(11) **EP 1 841 998 B1**
(45) Veröffentlichungstag und Bekanntmachung des Hinweises auf die Patenterteilung: **14.01.2009**
(21) Anmeldenummer: 05700339.4
(22) Anmeldetag: 28.01.2005
(51) Int. Cl.: F16L 19/10

(54) **VORRICHTUNG ZUR FL]SSIGKEITSDICHTEN VERBINDUNG EINES WEICHEN SCHLAUCHES**
DEVICE FOR THE LIQUID-PROOF CONNECTION OF A SOFT TUBE
DISPOSITIF PERMETTANT DE RACCORDER UN TUYAU SOUPLE DE MANIERE ETANCHE AUX FLUIDES

(43) Veröffentlichungstag der Anmeldung: 10.10.2007
(73) Patentinhaber: Connectors Verbindungstechnik AG, 8317 Tagelswangen (CH)
(72) Erfinder: RÖLL, Marcel, CH-8124 Maur (CH)
(74) Vertreter: Schmauder, Klaus Dieter
(86) Internationale Anmeldenummer: PCT/CH2005/000044
(87) Internationale Veröffentlichungsnummer: WO 2006/079222

(56) Entgegenhaltungen:
- FR-A- 2 640 720
- US-A- 3 980 325
- US-A- 5 558 375

## Beschreibung

### Technisches Gebiet

Die Vorrichtung zur flüssigkeitsdichten Verbindung eines weichen Schlauches mit einem Anschlussstück.

### Stand der Technik

Bei den bekannten Verbindungsvorrichtungen wird ein Schlauch auf ein Anschlussstück geschoben und mittels einer Schlauchbride oder Presshülse befestigt. In ersterem Fall kann kein steriler Übergang zwischen dem Anschlussstück und dem Schlauch garantiert werden. In letzterem Fall handelt es sich um eine unlösbare Verbindung.

Eine Verbindungsvorrichtung mit den Merkmalen des Oberbegriffs des Anspruchs 1 ist z.B. aus US-5558375 bekannt.

### Darstellung der Erfindung

Aufgabe der Erfindung ist es, eine Verbindungsvorrichtung zu schaffen, welche eine flüssigkeitsdichte, sterile und lösbare Verbindung zwischen einem Schlauch und einem Anschlussstück ermöglicht.

Diese Aufgabe wird erfindungsgemäss gelöst durch die kennzeichnenden Merkmale des Anspruches 1. Die Klemmhülse, welche mittels einer aufschraubbaren Überwurfmutter gegen ein auf ein Anschlussstück aufgesetztes Schlauchende gepresst wird, ermöglicht einerseits eine flüssigkeitsdichte, sterile und lösbare Verbindung zwischen dem Schlauch und dem Anschlussstück und ist andererseits lösbar.

Vorteilhafte Ausgestaltungen der Erfindung sind in den Ansprüchen 2 bis 9 umschrieben.

Der Rohrstutzen kann auf der Aussenseite eine glatte Oberfläche haben, bevorzugt ist diese jedoch aufgeraut oder gemäss Anspruch 2 mit mindestens einer Rückhaltenut ausgestattet, um die sichere Verbindung zwischen dem Schlauch und dem Rohrstück zu verbessern. Analog kann auch das Hülsensegment der Klemmhülse auf der Innenseite entweder glatt sein oder vorzugsweise aufgeraut bzw. noch vorteilhafter mit mindestens einer Rückhaltenut versehen sein, um eine dichte und haltbare Verbindung zu verbessern.

Erfindungsgemäß weist die Klemmhülse einen Befestigungsring auf, der ein Innengewinde enthält, das auf ein Aussengewinde aufgeschraubt werden kann, das an einem Absatz des Anschlussstückes angeordnet ist, welcher sich an den Rohrstutzen über einen Absatz anschliesst. Der Befestigungsring der Klemmhülse weist ein Aussengewinde auf, auf das die Überwurfmutter mittels eines Innengewindes aufschraubbar ist.

Die Auflauffläche der Klemmhülse kann verschiedenartig ausgestaltet sein, gemäss Anspruch 4 ist sie jedoch mit Vorteil als Abschnitt eines Aussenkonus ausgebildet. Analog kann auch die Auflauffläche der Überwurfmutter beliebig ausgestaltet sein, wobei jedoch die Ausbildung nach Anspruch 5 bevorzugt ist, in der die Auflauffläche als Abschnitt eines Innenkonus ausgebildet ist.

Die Klemmhülse kann gemäss Anspruch 6 aus Metall bestehen, vorzugsweise ist sie jedoch gemäss Anspruch 7 aus Kunststoff gefertigt.

Der Anschlussstutzen und/oder die Überwurfmutter können ebenfalls aus den verschiedensten Materialien hergestellt sein, wie z.B. gemäss Anspruch 8 aus Kunststoff. Vorteilhafter sind sie jedoch gemäss Anspruch 9 aus Metall gefertigt.

Die Verbindungsvorrichtung ist für weiche Schläuche der verschiedensten Art geeignet, die vorzugsweise aus Kunststoff bestehen. Sie können z.B. mit Gewebe, Draht oder Mehrschichten verstärkt sein oder eine Kombination von allem aufweisen.

Die erfindungsgemässe Verbindungsvorrichtung ist eine hochwertige, wieder verwendbare Schlauchverbindung, welche höchsten Ansprüchen der chemischen, pharmazeutischen und biochemischen Industrie sowie der Lebensmittel-Industrie genügt. Eine solche Verbindungsvorrichtung ist in den verschiedensten Abmessungen und mit den verschiedensten Anschlussstücken herstellbar. Die Klemmhülse erlaubt verschiedene Wandstärken der Schläuche auszugleichen, ohne dadurch die Druckbeständigkeit zu beeinflussen.

### Kurze Beschreibung der Zeichnungen

Ausführungsbeispiele der Verbindungsvorrichtung werden nachfolgend anhand der Zeichnungen näher beschrieben, dabei zeigen:
- Figur 1: eine Verbindungsvorrichtung an einem Schlauch in Seitenansicht, wobei die obere Hälfte geschnitten ist;
- Figur 2: eine Anschlussstück der Verbindungsvorrichtung in Seitenansicht und geschnitten;
- Figur 3: eine Klemmhülse der Verbindungsvorrichtung in Seitenansicht und geschnitten; und
- Figur 4: eine Überwurfmutter der Verbindungsvorrichtung in Seitenansicht und geschnitten.

### Wege zur Ausführung der Erfindung

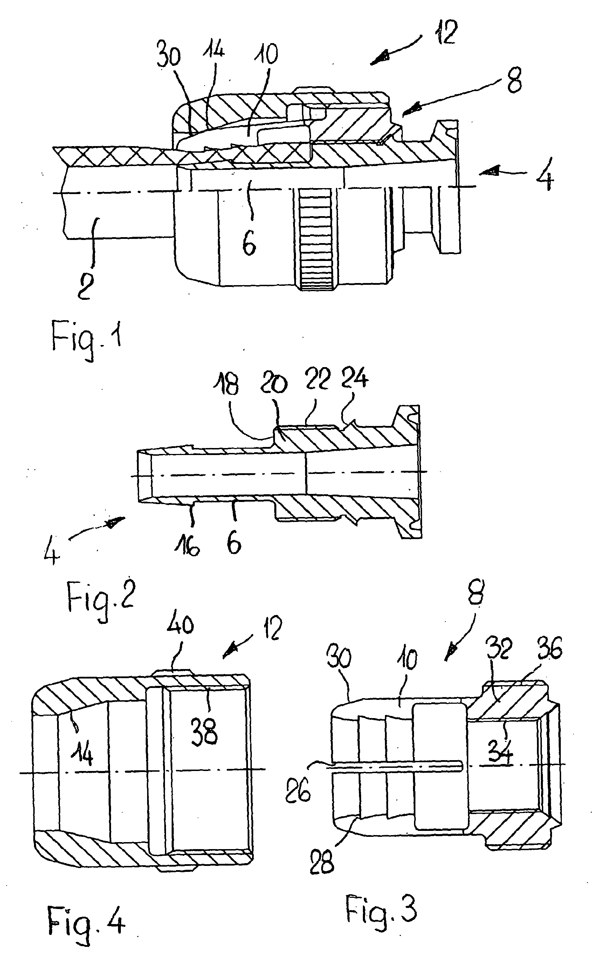

Die Figuren 1 bis 4 zeigen eine Vorrichtung zur flüssigkeitsdichten Verbindung eines weichen Schlauches 2 mit einem Anschlussstück 4. Das Anschlussstück 4 ist mit einem Rohrstutzen 6 zum Ansetzen des Schlauches 2 ausgestattet. Eine Klemmhülse 8, welche über den Umfang verteilt mindestens zwei oder mehrere Hülsensegmente 10 aufweist, ragt mit diesen über den Rohrstutzen 6. Eine Überwurfmutter 12 ist mit der Klemmhülse 8 verschraubbar und weist innenliegende Auflaufflächen 14 auf, die mit den Hülsensegmenten 10 zusammenwirken, um diese gegen den Schlauch 2 zu drücken.

Die Figur 2 zeigt das Anschlussstück 4 im Detail. Der Rohrstutzen 6 weist eine Rückhaltenut 16 auf und geht über einen Absatz 18 in einen Abschnitt 20 über, der mit einem Aussengewinde 22 und einem Anschlag 24 versehen ist.

Die Figur 3 zeigt die Klemmhülse 8 im Detail. Diese weist im vorliegenden Fall vier am Umfang verteilte Hülsensegmente 10 auf, die durch Schlitze 26 voneinander getrennt sind. Diese Hülsensegmente 10 sind auf der Innenseite mit mehreren Rückhaltenuten 28 versehen, die mit dem Schlauch 2 zusammenwirken wie aus Figur 1 ersichtlich ist. Auf der Aussenseite enthalten die Hülsensegmente 10 Auflaufflächen 30, die im Wesentlichen in Form eines Abschnittes eines Aussenkonus ausgebildet sind. Die Hülsensegmente 10 sind an einem Befestigungsring 32 angeformt, der mit einem Innengewinde 34 versehen ist, so dass der Befestigungsring 32 auf das Aussengewinde 22 des Anschlussstückes 4 aufschraubbar ist, bis der Befestigungsring 32 am Anschlag 24 ansteht. Der Befestigungsring 32 ist weiter mit einem Aussengewinde 36 versehen, auf das die Überwurfmutter 12 mit einem Innengewinde 38 aufschraubbar ist.

Die in Figur 4 dargestellte Überwurfmutter 12 enthält überdies eine Auflauffläche 14, die mit der Auflauffläche 30 der Hülsensegmente 10 der Klemmhülse 8 zusammenwirken. Eine Rändelung 40 auf der Aussenseite der Überwurfmutter 12 verbessert die Griffigkeit der Überwurfmutter beim Festschrauben von Hand. Anstelle der Riffelung oder zusätzlich kann die Überwurfmutter mit Schlüsselflächen zum Ansetzen eines Schlüssels vorzugsweise mit einer Anzeige für ein Drehmomenten versehen sein. Damit kann der Anpressdruck der Hülsensegmente auf den Schlauch auf einen bestimmbaren Wert eingestellt werden, um einerseits eine gute Abdichtung und einen sicheren Halt zu gewährleisten und andererseits ein Überspannen und damit eine Beschädigung der Verbindungsteile zu verhindern.

### Bezugszeichenliste

- 2: Schlauch
- 4: Anschlussstück
- 6: Rohrstutzen
- 8: Klemmhülse
- 10: Hülsensegment
- 12: Überwurfmutter
- 14: Auflauffläche
- 16: Rückhaltenut
- 18: Absatz
- 20: Abschnitte
- 22: Aussengewinde
- 24: Anschlag
- 26: Schlitz
- 28: Rückhaltenut
- 30: Auflauffläche
- 32: Befestigungsring
- 34: Innengewinde
- 36: Aussengewinde
- 38: Innengewinde
- 40: Rändelung

## Patentansprüche

1. Vorrichtung zur flüssigkeitsdichten Verbindung eines weichen Schlauches (2) mit einem Anschlussstück (4), wobei das Anschlussstück (4) einen Rohrstutzen (6) zum Ansetzen des Schlauches (2) aufweist, sowie mit einer Klemmhülse (8), welche über den Umfang verteilt mindestens zwei Hülsensegmente (10) aufweist, die über den Rohrstutzen (6) ragen und auf der Aussenseite eine Auflauffläche (30) aufweisen, ferner mit einer Überwurfmutter (12), welche mittels einer innen liegenden Auflauffläche (14) mit der Auflauffläche (30) der Hülsensegmente (10) zusammenwirkt, um diese gegen den Schlauch (2) zu pressen, **dadurch gekennzeichnet, dass** der Rohrstutzen (6) über einen Absatz (18) in einen Abschnitt (20) mit einem Aussengewinde (22) und einen Anschlag (24) übergeht, an dem die einen Befestigungsring (32) mit einem Innengewinde (34) aufweisende Klemmhülse (8) gegen den Anschlag (24) aufschraubbar ist, dass der Befestigungsring (32) der Klemmhülse (8) ein Aussengewinde (36) aufweist, auf das die Überwurfmutter (12) mittels eines Innengewindes (38) aufschraubbar ist.

2. Vorrichtung nach Anspruch 1, **dadurch gekennzeichnet, dass** der Rohrstutzen (6) auf der Aussenseite mindestens eine Rückhaltenut (16) aufweist.

3. Vorrichtung nach Anspruch 1 oder 2, **dadurch gekennzeichnet, dass** die Hülsensegmente (10) auf der Innenseite mindestens eine Rückhaltenut (28) aufweisen.

4. Vorrichtung nach einem der Ansprüche 1 bis 3, **dadurch gekennzeichnet, dass** die Auflauffläche (14) der Klemmhülse (8) als Abschnitt eines Aussenkonus ausgebildet ist.

5. Vorrichtung nach einem der Ansprüche 1 bis 4, **dadurch gekennzeichnet, dass** die Auflauffläche (30) der Überwurfmutter (12) als Abschnitt eines Innenkonus ausgebildet ist.

6. Vorrichtung nach einem der Ansprüche 1 bis 5, **dadurch gekennzeichnet, dass** die Klemmhülse (8) aus Metall besteht.

7. Vorrichtung nach einem der Ansprüche 1 bis 5, **dadurch gekennzeichnet, dass** die Klemmhülse (8) aus Kunststoff besteht.

8. Vorrichtung nach einem der Ansprüche 1 bis 7, **dadurch gekennzeichnet, dass** der Anschlussstutzen (4) und/oder die Überwurfmutter (12) aus Kunststoff bestehen.

9. Vorrichtung nach einem der Ansprüche 1 bis 8, **dadurch gekennzeichnet, dass** der Anschlussstutzen (4) und/oder die Überwurfmutter (12) aus Metall bestehen.

## Claims

1. A device for liquid-proof connection of a soft tube (2) to a connecting piece (4), wherein the connecting piece (4) is provided with a tube stub (6) for applying the tube (2), and with a clamping sleeve (8), which is provided with at least two sleeve segments (10) that are distributed along the circumference thereof, protrude from the tube stub (6) and are equipped with a sloped stopping face (30) on the exterior face, and, moreover, with a union nut (12), which cooperates with the sloped stopping face (30) of the sleeve segments (10) by means of an interior sloped stopping face (14) in order to press the same against the tube (2), **characterized in that** the tube stub (6) is formed with a transition over a step (18) to a portion (20) having an outer thread (22) and a stop (24), onto which the clamping sleeve (8) provided with a mounting ring (32) having an inner thread (34) may be screwed on against the stop (24), the mounting ring (32) of the clamping sleeve (8) being provided with an outer thread (36) onto which the union nut (12) may be screwed on by means of an inner thread (38).

2. The device according to claim 1, **characterized in that** the tube stub (6) is provided with at least one retaining groove (16) on the exterior face.

3. The device according to claim 1 or 2, **characterized in that** the sleeve segments ( 10) are provided with at least one retaining groove (28) on the interior face.

4. The device according to any one of claims 1 to 3, **characterized in that** the sloped stopping face (14) of the clamping sleeve (8) is formed as a portion of an exterior tapered segment.

5. The device according to any one of claims 1 to 4, **characterized in that** the sloped stopping face (30) of the union nut (12) is formed as a portion of an interior tapered segment.

6. The device according to any one of claims 1 to 5, **characterized in that** the clamping sleeve (8) is made of metal.

7. The device according to any one of claims 1 to 5, **characterized in that** the clamping sleeve (8) is made of plastic.

8. The device according to any one of claims 1 to 7, **characterized in that** the connecting piece (4) and/or the union nut (12) are made of plastic.

9. The device according to any one of claims 1 to 8, **characterized in that** the connecting piece (4) and/or the union nut (12) are made of metal.

## Revendications

1. Dispositif pour raccorder de manière étanche aux fluides, un tuyau souple (2) à un raccord (4), dans lequel
le raccord (4) a un élément tubulaire (6) pour être fixé au tuyau (2) et un manchon de serrage (8) ayant au moins deux segments de manchon (10) répartis à la périphérie, qui dépassent du manchon tubulaire (6), et comportent sur le côté extérieur une surface en forme de rampe (30) ainsi qu'un écrou-chapeau (12) qui coopère par sa surface intérieure en forme de rampe (14) avec la surface en forme de rampe (30) du segment de manchon (10) pour comprimer celui-ci contre le tuyau (2),
**caractérisé en ce que**
le manchon tubulaire (6) a un épaulement (18) qui rejoint un segment (20) muni d'un filetage extérieur (22) et une butée (24), filetage sur lequel le manchon de serrage (8) comportant un anneau de fixation (32) muni d'un filetage intérieur (34) se visse contre la butée (24), et
la bague de fixation (32) du manchon de serrage (8) comporte un filetage extérieur (36) sur lequel se visse le filetage intérieur (38) de l'écrou-chapeau (12).

2. Dispositif selon la revendication 1,
**caractérisé en ce que**
le manchon tubulaire (6) comporte sur son côté extérieur, au moins une nervure de retenue (16).

3. Dispositif selon la revendication 1 ou 2,
**caractérisé en ce que**
les segments de manchon (10) comportent sur le côté intérieur au moins une rainure de retenue (28).

4. Dispositif selon les revendications 1 à 3,
**caractérisé en ce que**
la surface en forme de rampe (14) du manchon de serrage (8) est réalisée sous la forme d'un segment de cône extérieur.

5. Dispositif selon les revendications 1 à 4,
**caractérisé en ce que**
la surface en forme de rampe (30) de l'écrou chapeau (12) est réalisée sous la forme d'un segment de cône intérieur.

6. Dispositif selon les revendications 1 à 5,
**caractérisé en ce que**
le manchon de serrage (8) est en métal.

7. Dispositif selon les revendications 1 à 5,
**caractérisé en ce que**
le manchon de serrage (8) est en matière plastique.

8. Dispositif selon les revendications 1 à 7,
**caractérisé en ce que**
le raccord (4) et/ou l'écrou chapeau (12) sont en matière plastique.

9. Dispositif selon les revendications 1 à 8,
**caractérisé en ce que**
le raccord (4) et/ou l'écrou chapeau (12) sont en métal.
